**Europäisches Patentamt**

**European Patent Office**

**Office européen des brevets**

(19)

(11) Veröffentlichungsnummer: **0 057 378**
**B1**

(12) **EUROPÄISCHE PATENTSCHRIFT**

(45) Veröffentlichungstag der Patentschrift:
28.03.84

(21) Anmeldenummer: **82100397.7**

(22) Anmeldetag: **21.01.82**

(51) Int. Cl.³: **H 02 P 8/00**

(54) **Schaltungsanordnung für einen Schrittmotor.**

(30) Priorität: **30.01.81 DE 3103097**

(43) Veröffentlichungstag der Anmeldung:
**11.08.82 Patentblatt 82/32**

(45) Bekanntmachung des Hinweises auf die Patenterteilung:
**28.03.84 Patentblatt 84/13**

(84) Benannte Vertragsstaaten:
**CH FR GB LI SE**

(56) Entgegenhaltungen:
**CH - B - 468 113**
**DE - A - 2 009 752**
**FR - A - 1 377 069**
**FR - A - 2 430 690**
**GB - A - 1 010 571**
**GB - A - 1 194 297**
**US - A - 3 392 293**

(73) Patentinhaber: **Felten & Guilleaume Fernmeldeanlagen GmbH, Thurn-und-Taxis-Strasse 10 Postfach 4943, D-8500 Nürnberg 10 (DE)**

(72) Erfinder: **Kirschner, Klaus P., Burgunden Strasse 8, D-8500 Nürnberg (DE)**

(74) Vertreter: **Peuckert, Hermann, Philips Patentverwaltung GmbH Billstrasse 80 Postfach 10 51 49, D-2000 Hamburg 28 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Schaltungsanordnung für einen Schrittmotor

Die Erfindung betrifft eine Schaltungsanordnung für einen Schrittmotor, dessen Statorwicklungen mit je einem in Reihe liegenden Thyristor an eine Konstantstromquelle an- und abschaltbar sind. Derartige Schaltungen können beispielsweise für den Antrieb des Druckwerkes in Fernschreibern verwendet werden.

Die Anwendung eines Schrittmotors mit relativ geringem Selbsthaltemoment bringt den Vorteil eines entsprechend geringen Energiebedarfes zur Ausführung jedes Schrittes mit sich. Zur Vermeidung von unerwünschten Bewegungen durch mechanische Störungen, z.B. Erschütterungen, kann das Selbsthaltemoment durch ein zusätzliches Magnetfeld unterstützt werden, das von einem im Ruhezustand in einer Statorwicklung fliessenden Strom erzeugbar ist.

Das Anschalten der Statorwicklungen erfolgt mittels der in Reihe liegenden Thyristoren, deren leitender Zustand jeweils durch den über sie fliessenden Strom aufrecht erhalten bleibt. Zum Abschalten einer Statorwicklung muss der zugehörige Thyristor gesperrt werden, wozu in der Regel eine besondere Löscheinrichtung erforderlich ist. Es ist von Vorteil, wenn man zum Löschen eines Thyristors den Thyristor einer anzuschaltenden Statorwicklung mitbenutzen kann.

Der Erfindung liegt die Aufgabe zugrunde, eine besonders einfache Schaltungsordnung mit Thyristoren anzugeben, mit der ein in einer Statorwicklung eines Schrittmotors fliessender Strom möglichst schnell und verlustarm auf eine andere Wicklung umschaltbar ist und bei der der Thyristor der anzuschaltenden Wicklung als Löschthyristor des vorher gezündeten Thyristors wirkt.

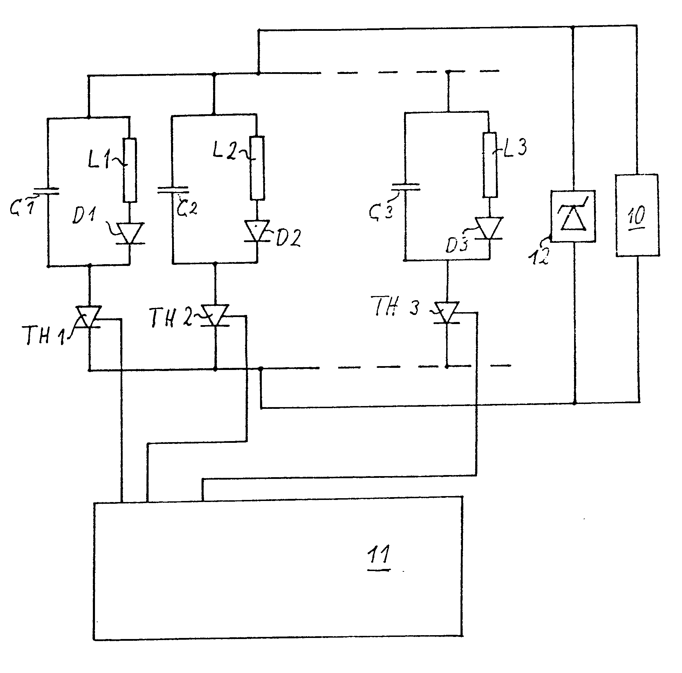

Diese Aufgabe wird bei einer Schaltungsanordnung der eingangs genannten Art dadurch gelöst, dass in Reihe mit jeder Statorwicklung je eine Diode geschaltet ist und dass parallel zu jeder derart gebildeten Reihenschaltung je ein Kondensator angeschlossen ist, dessen Ladung bei Zündung des zugehörigen Thyristors die Löschung des vorher gezündeten Thyristors bewirkt. Die Erfindung wird anhand des in der Figur schematisch dargestellten Ausführungsbeispiels näher beschrieben und erläutert.

Der besseren Übersichtlichkeit wegen sind in der Figur nur drei Wicklungen L1, L2 und L3 eines Schrittmotors gezeigt. Mit gestrichelten Linien ist dabei angedeutet, dass der jeweils benutzte Motor eine grössere Anzahl von Wicklungen haben kann. Da auch die räumliche Anordnung der Wicklungen zueinander keinen unmittelbaren Einfluss auf die Funktionsweise der dargestellten Schaltung hat, ist auch die Verwendungsmöglichkeit z.B. bei Linearmotoren ersichtlich.

Das ebenfalls nicht dargestellte bewegliche Element eines solchen Motors, in der Regel der Rotor, nimmt eine der jeweils angesteuerten Wicklungen entsprechende Position ein. Dabei wirkt das Magnetfeld einer stromführenden Wicklung auf den Rotor.

Die Wicklungen L1, L2, L3 können mit den zugehörigen, in Reihe liegenden Thyristoren Th1, Th2, Th3 an die Energieversorgung 10 angeschaltet werden. Als Energieversorgung 10 wird eine Konstantstromquelle verwendet. Zur Verhinderung von schädlichen Überspannungen an den Ausgangsklemmen der Konstantstromquelle 10 ist ein Überspannungsschutz 12 vorgesehen.

Von einem Steuerbaustein 11 werden die Zündimpulse für die Steuerelektroden der Thyristoren Th1, Th2, Th3 erzeugt.

In Reihe mit den Wicklungen L1, L2, L3 liegen Dioden D1, D2, D3. Parallel zu den daraus gebildeten Reihenschaltungen sind jeweils Kondensatoren C1, C2, C3 geschaltet.

Beim Einschalten wird die von der Konstantstromquelle 10 erzeugte Spannung zunächst auf den vom Überspannungsschutz 12 vorgegebenen Wert begrenzt, weil in der angeschlossenen Schaltung keine offenen Stromwege vorhanden sind, solange die Thyristoren Th1, Th2, Th3 gesperrt sind. Anfangs sind die Kondensatoren C1, C2, C3 ungeladen.

Soll der Rotor des Schrittmotors in die vom Magnetfeld der Wicklung L2 bestimmte Position gebracht werden, so wird der Thyristor Th2 gezündet. Durch diesen Thyristor Th2 fliesst der Strom in den Kondensator C2, so dass die Spannung aus der Konstantstromquelle 10 zusammenbricht. Mit zunehmender Ladung des Kondensators C2 steigt die Spannung wieder an.

Übersteigt die Spannung die Schwellspannung der Diode D2, dann fliesst zusätzlich Strom über die parallel zum Kondensator C2 liegende Wicklung L2. Da die Wicklung L2 den Strom nicht sofort voll übernehmen kann, führt der Kondensator C2 weiterhin die Stromdifferenz zwischen dem Strom aus der Konstantstromquelle 10 und dem Momentanwert des Stromes in der Wicklung L2, bis diese den Strom aus der Konstantstromquelle 10 völlig übernommen hat. Das von der Wicklung L2 erzeugte Magnetfeld bewirkt nun die gewünschte Bewegung.

Über den durchgeschalteten Thyristor Th2 fliesst weiterhin Strom durch die Wicklung L2 und erzeugt das gewünschte Haltemoment.

Wird nun der Thyristor Th1 gezündet, dann fliesst der Strom durch den noch ungeladenen Kondensator C1, wodurch die Spannung an der Konstantstromquelle 10 zusammenbricht und der Thyristor Th2 sperrt. In dem zum Thyristor Th1 gehörigen Kreis spielt sich im übrigen der für Thyristor Th2 schon beschriebene Vorgang ab und erzeugt in der Wicklung L1 das gewünschte Magnetfeld.

Durch das Sperren des Thyristors Th2 fehlt der äussere Schluss des Stromkreises in der Wicklung L2. Der Strom durch die Wicklung L2 bleibt jedoch in der ursprünglichen Richtung bestehen und fliesst nun durch den Kondensator C2, wodurch dieser umgeladen wird. Das Zurückfliessen der Ladung aus dem Kondensator C2 in die Wicklung L2 wird durch die Diode D2 verhindert, so dass der in dieser Weise erzeugte Ladezustand bis zu einer erneuten Zündung des Thyristors Th2 erhalten bleibt. Hierdurch wird der Thyristor Th2 sicher im Sperrzustand gehalten.

Wird nun der Thyristor Th2 erneut gezündet, so wirkt die Spannung am Kondensator C2 als Gegenspannung, auf die die Spannung aus der Konstantstromquelle 10 absinkt, so dass der vorher gezündete Thyristor Th1 besonders schnell und zuverlässig sperrt.

**Patentanspruch**

Schaltungsanordnung für einen Schrittmotor, dessen Statorwicklungen (L1, L2, L3) mit je einem in Reihe liegenden Thyristor (Th1, Th2, Th3) an eine Konstantstromquelle (10) an- und abschaltbar sind, dadurch gekennzeichnet, dass in Reihe mit jeder Statorwicklung (L1, L2, L3) je eine Diode (D1, D2, D3) geschaltet ist und dass parallel zu jeder derartig gebildeten Reihenschaltung je ein Kondensator (C1, C2, C3) angeschlossen ist, dessen Ladung bei Zündung des zugehörigen Thyristors die Löschung des vorher gezündeten Thyristors bewirkt.

**Claim:**

A circuit arrangement for a stepping motor, whose stator windings (L1, L2, L3) are each connectible to and disconnectible from a constant-current source (10) by means of a thyristor (Th1, Th2, Th3) arranged in series with the respective stator winding, characterized in that a diode (D1, D2, D3) is arranged in series with each stator winding (L1, L2, L3) and a capacitor (C1, C2, C3) is arranged in parallel with each series arrangement thus formed, the charge on said capacitor causing the previously turned-on thyristor to be turned off when the thyristor associated with said capacitor is turned on.

**Revendication**

Circuit de commande pour un moteur pas à pas dont les enroulements de stator ($L_1$, $L_2$, $L_3$) peuvent être branchés sur une source (10) de courant constant et être débranchés de celle-ci au moyen d'un thyristor (Th1, Th2, Th3) monté en série avec chacun de ces enroulements, caractérisé en ce qu'une diode (D1, D2, D3) est montée en série avec chaque enroulement de stator (L1, L2, L3) et ce qu'un condensateur (C1, C2, C3) est monté en parallèle avec chaque montage série ainsi formé, la charge présente dans le condensateur lors de l'excitation du thyristor correspondant, provoquant la désexcitation du thyristor précédemment excité.